# EUROPEAN PATENT APPLICATION

(11) **EP 3 654 291 A1**
(43) Date of publication of application: **20.05.2020**
(21) Application number: 19209569.3
(22) Date of filing: 15.11.2019
(51) Int. Cl.: G06T 11/60

(54) **IMAGE PROCESSING SYSTEM, METHOD AND COMPUTER READABLE RECORDING MEDIUM THEREOF**

(30) Priority: 15.11.2018 KR 20180140454
(71) Applicant: Hyperconnect, Inc., Seoul 06164 (KR)
(72) Inventor: Ahn, Sangil, Cheongju-si, Chungcheongbuk-do (KR); Lee, Myounghee, Seoul (KR); Kim, Kangsan, Seoul (KR); Fujimura, Takahiro, Seoul (KR); Cho, Hwan, Seoul (KR); Kim, Kyoungho, Seongnam-si, Gyeonggi-do (KR)
(74) Representative: Gulde & Partner

(57) **Abstract**

An image processing system, and a method and computer readable recording medium thereof are disclosed. The image processing method according to an embodiment of the present disclosure includes obtaining a first image using a user terminal that includes a photographing device, detecting a first object group that includes at least one object from the first image, obtaining a second image using the user terminal, detecting a second object group that includes at least one object from the second image, creating a new object by combining the first object group and the second object group, and displaying the created new object on a display device of the user terminal.

## Description

### 1. Field

The present disclosure relates to an image processing system, and a method and computer readable recording medium thereof, and more particularly, to an image processing system configured to combine photographed images that are different from one another to create and provide a new image, and a method and computer readable recording medium thereof. 2. Background

As communication technologies advance and electronic devices become miniaturized, personal use terminals are coming into wide use among general consumers. Especially, in recent years, mobile personal use terminals such as smartphones and smart tablet PCs have been coming into wide use. Most of the terminals include image photographing means, enabling users to photograph images that include various objects using the personal terminals. Further, due to the development of Machine Learning technologies, it is becoming possible to recognize the objects included in an image and perform various image processing in response to the result of recognition.

### SUMMARY

A purpose of the present disclosure is to provide an image processing system capable of providing new user experience and fun, and a method and computer readable recording medium thereof.

The image processing system according to an embodiment of the present disclosure may include a imaging device for obtaining an image, a detector for detecting at least one object included in the image obtained through the imaging device; an object creator for creating a new object by combining a plurality of objects detected in the detector; and a display for displaying the detected object and the new object.

Further, the image processing system may further include a storage for storing information about the object detected in the detector and the new object created in the object creator.

Meanwhile, an image processing method according to an embodiment of the present disclosure may include obtaining a first image using a user terminal that includes a photographing device; detecting a first object group that includes at least one object from the first image; obtaining a second image using the user terminal; detecting a second object group that includes at least one object from the second image; creating a new object by combining the first object group and the second object group; and displaying the created new object on a display device of the user terminal.

Further, the image processing method may further include storing information about at least one object detected from the first object group in an object database; and storing information about at least one object detected from the second object group in the object database.

Further, the image processing method may further include storing information about the new object in the object database.

Further, the creating a new object may include determining a number of cases that the new object can be created by combining at least one object included in the first object group and at least one object included in the second object group.

Further, the creating a new object may create the new object as a result of all possible combinations of the object included in the first object group and the object included in the second object group.

Further, the image processing method may further include displaying a recognition result of at least one object included in the first object group on the display device; displaying a recognition result of at least one object included in the second object group on the display device; and displaying a type or title of the created new object on the display device.

Meanwhile, an image processing method according to another embodiment of the present disclosure may include obtaining an image using a user terminal that includes a photographing device; detecting a plurality of objects included in the image; creating a new object by combining the detected plurality of objects; and displaying the created new object on a display device of the user terminal.

Further, the image processing method may further include storing information about the detected object in an object database.

Further, the image processing method may further include storing information about the created new object in the object database.

Further, the creating a new object may include determining a number of cases that the new object can be created for every object detected from the image.

Further, the image processing method may further include displaying an object recognition result in the image on the display device; and displaying a type or title of the new object on the display device.

Meanwhile, a computer readable recording medium where a program for performing the image processing method according to the present disclosure is recorded may be provided.

The present disclosure may provide an image processing system capable of providing new user experience and fun, and a method and computer readable recording medium thereof.

### BRIEF DESCRIPTION OF THE DRAWINGS

FIG. 1 is a network configuration view of an environment where an image processing system according to an embodiment of the present disclosure operates;
FIG. 2 is a view approximately illustrating a configuration of the image processing system according to the embodiment of the present disclosure;
FIG. 3 is a view approximately illustrating an image processing system according to another embodiment of the present disclosure;
FIG. 4 is a flowchart approximately illustrating an image processing method according to an embodiment of the present disclosure;
FIGs. 5 to 7 are exemplary views of an object being detected and a new object being created according to an embodiment of the present disclosure;
FIGs. 8 to 10 flowcharts approximately illustrating an image processing method according to another embodiment of the present disclosure;
FIGs. 11 and 12 are flowcharts approximately illustrating an image processing method according to another embodiment of the present disclosure; and
FIGs. 13 and 14 are exemplary views illustrating an object being detected and a new object being created according to another embodiment of the present disclosure.

### DETAILED DESCRIPTION

The advantages and characteristics of the present disclosure, and the method for achieving those advantages and characteristics will be clarified with reference to the embodiments that will be explained hereinafter in detail together with the drawings attached hereto. However, the present disclosure is not limited to the embodiments disclosed hereinafter, but may be implemented in various different forms, and the present embodiments are provided merely for the purpose of complete disclosure of the present disclosure, and for the purpose of informing a person skilled in the art of the scope of the present disclosure, and the present disclosure is to be defined only by the scope of the claims. Like reference numerals indicate like configurative elements throughout the entirety of the specification.

Even though "a first" or "a second" and the like are used to describe various configurative elements, these configurative elements are not limited by the afore-mentioned terms. The afore-mentioned terms can only be used to differentiate one configurative element from other configurative elements. Therefore, a first configurative element mentioned hereinafter may be a second configurative element within the technical idea of the present disclosure.

The terms used in the present specification were used to explain the embodiments, and not to limit the present disclosure. In the present specification, a singular form includes plural forms unless specially mentioned otherwise. "Comprises" or "comprising" used in the present specification imply that the mentioned configurative element or step does not exclude the presence or addition of one or more other configurative elements or steps.

Unless defined otherwise, all the terms used in the present specification may be construed to mean what may be commonly understood by a person skilled in the art. Further, the terms defined in generally used dictionaries should not be construed ideally or overly unless clearly defined specially.

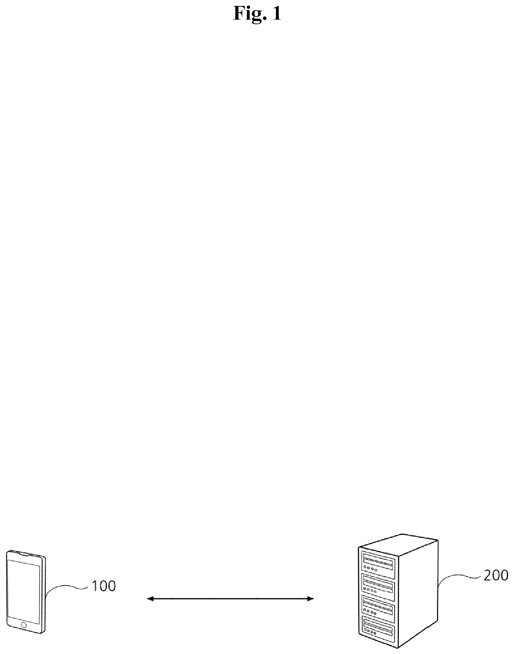

Hereinbelow, an image processing system according to the present disclosure, and a method and computer readable recording medium thereof will be explained in detail with reference to FIGs. 1 to 14.

FIG. 1 is a network configuration view of an environment where the image processing system according to an embodiment of the present disclosure operates. Referring to FIG. 1, the environment where the image processing system operates may include a server 20 and a user terminal 10. For example, the environment where the image processing system operates may not include the server 20.

The image processing system may be connected by the medium of the server 20. For convenience of explanation of the present disclosure, one image processing system is illustrated in FIG. 1. However, the number of the image processing system is not limited to one. The image processing system may be implemented as one of a desktop computer, laptop computer, smartphone, smart tablet PC, smart watch, mobile terminal, digital camera, wearable device, or mobile electronic device. The image processing system may execute a program or application.

The image processing system may be connected to a communication network. The image processing system may be connected with another system outside through the communication network. The image processing system may output data to the other system connected therewith or receive data from the other system.

The communication network connected with the image processing system may include a wired communication network, wireless communication network and complex communication network. The communication network may include a mobile communication network such as 3G, LTE or LTE-A, etc. The communication network may include a wired or wireless communication network such as Wi-Fi, UMTS/GPRS or Ethernet, etc. The communication network may include a short-distance communication network such as Magnetic Secure Transmission (MST), Radio Frequency Identification (RFID), Near Field Communication (NFC), ZigBee, Z-Wave, Bluetooth, Bluetooth Low Energy (BLE) or InfraRed communication (IR), etc. The communication network may include a Local Area Network (LAN), Metropolitan Area Network (MAN), or Wide Area Network (WAN), etc.

The server 20 may store an object that a user of the user terminal 10 detected or newly created using the image processing system. Further, the server 20 may store information about the object detectable by the image processing system and information about the object creatable by combining the detected object.

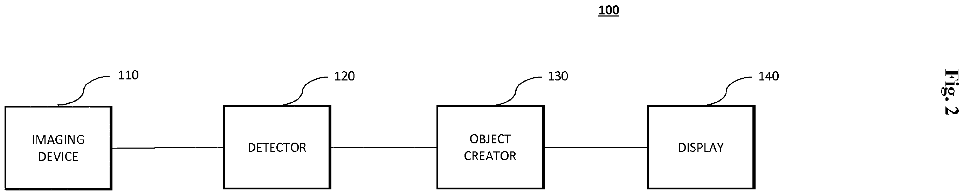

FIG. 2 is a view approximately illustrating a configuration of the image processing system according to an embodiment of the present disclosure. Referring to FIG. 2, the image processing system according to an embodiment of the present disclosure 100 includes a imaging device 110, detector 120, object creator 130 and display 140.

The image processing system according to an embodiment of the present disclosure 100 may be implemented in the form of a user terminal, wherein the imaging device 110 and the display 140 may be understood as respectively corresponding to a camera and a display panel provided in the user terminal.

When an image is obtained through the imaging device 110, the detector 120 detects at least one object included in the image. The detector 120 may detect various kinds of objects included in the image, and may detect an object included in a pre-view image using a pre-learned model.

The imaging device 110 may obtain an image using a photographing device such as a camera and the like provided in the user terminal, wherein in an embodiment, the image may be obtained in response to a shutter input corresponding to an image obtainment shown through the display 140. According to another embodiment, the image may be obtained when a practically identical image is shown through the display 140 for a pre-determined time or more. Otherwise, the image may be obtained by reading an image stored in the user terminal.

Meanwhile, the pre-learned model may be a data recognition model used for identifying an object included in the pre-view image. The data recognition model may be a model that is based on a neural network. For example, as the pre-learned model, models such as Deep Neural Network (DNN), Recurrent Neural Network (RNN) and Bidirectional Recurrent Deep Neural Network (BRDNN) may be used as the data recognition model, but there is no limitation thereto.

The prepared pre-learned model may be for identifying the type of the object included in the pre-view image. The pre-learned model for identifying the type of the object may be a result learned from a correlation between a plurality of photograph image data and the types of the objects included in a plurality of photographs. For example, the user terminal may learn the correlation between the plurality of photograph image data and the types of the objects included in the plurality of photographs. The user terminal may train its artificial neural network based on the learned result, to create the pre-learned model for identifying the type of the object included in the pre-view image.

In another embodiment, the user terminal may receive the pre-learned model for identifying the type of the object from the server 300 such as that explained with reference to FIG. 1. In this case, the server 300 may create the pre-learned model for identifying the type of the object included in the pre-view image.

Herein, in order to receive the pre-learned model from the server 300, the user terminal may use a communicator (not illustrated) for communicating with the server 300. The communicator may receive the pre-learned model from the server 300 and provide it to the detector 120.

The communicator may include a long-distance network interface such as, for example, a 3G module, LTE module, LTE-A module, Wi-Fi module, WiGig module, Ultra Wide Band (UWB) module, or LAN card etc. Further, the communicator may include a short-distance network interface such as a Magnetic Secure Transmission (MST) module, Bluetooth module, NFC module, RFID module, ZigBee module, Z-Wave module, or InfraRed ray module, etc. Further, the communicator may include other network interfaces.

Meanwhile, when an object is detected through the detector 120, the detected object may be shown to the user by the display 140. For example, in a case where the image obtained by the imaging device 110 includes a motor vehicle, the detector 120 may detect from the image a car, wheels, windows, steel, glass and the like as the object.

For example, when the detector 120 detects as the object the motor vehicle from the image, the display 140 may display an object image that corresponds to the motor vehicle. The object image may be an actual image of the motor vehicle itself included in the image, or an illustration pre-designed to correspond to the motor vehicle.

When the detector 120 detects the object from the image, the display 140 may display the object image. Herein, the object image may be displayed in an overlay form on top of the image obtained by the imaging device 110, or solely as the object image. However, the method of displaying the object image is not limited to the above-exemplified methods.

Meanwhile, the display 140 may display a type or name of the detected object together with the object image at the same of displaying the object image that corresponds to the detected object. For example, in the above example, when the detector 120 detects the motor vehicle, the display 140 may also display a text, 'car', on the periphery of the object image at the same time of displaying the object image corresponding to the motor vehicle.

The display 140 may display a screen on the user terminal, and may display various screens in response to an input from the user. Further, the display 140 may display an operation result performed by a Central Processing Unit (CPU) included in the user terminal and data thereof. Further, the display 140 may display the image obtained by the imaging device 110 and the object included in the image and detected by the detector 120, and may display a new object created by the object creator 130.

Further, the display 140 may include a flat panel display device such as a Liquid Crystal Display (LCD), Organic Light Emitting Diode (OLED) or Plasma Display Panel (PDP), etc. The display 140 may include a curved display or flexible display.

Meanwhile, the object creator 130 combines a plurality of objects detected in the detector 120 and creates a new object that is different from the detected objects. The new object is different from the plurality of objects detected in the detector 120. Herein, the plurality of objects detected in the detector 120 are not necessarily limited to those that are different from one another. Therefore, the detector 120 may even detect a plurality of identical objects.

For example, when the detector 120 detects as objects two wheels from the image obtained by the imaging device 110, the object creator 130 may create bicycle as the new object by combining the two wheels. The display 140 may display the object image corresponding to the bicycle, that is the new object, and display a text, 'bicycle', together with the object image. In another example, when the detector 120 detects fire and water from an image, the object creator 130 may create steam as the new object. Further, the display 140 may display the texts, 'fire', 'water' and 'steam'. The texts being displayed by the display 140 were explained in the above embodiments as being in Korean language, but the present disclosure is not limited thereto, that is, the display 140 may display the texts in other any other language set by the user.

Meanwhile, the object creator 130 may create a new object by combining three or more objects. For example, when the detector 120 detects as objects four wheels from an image, the object creator 130 may create a motor vehicle as the new object by combining these. Further, when two wheels and one steel are detected as objects by the detector 120, the object creator 130 may create a bike as the new object by combining these.

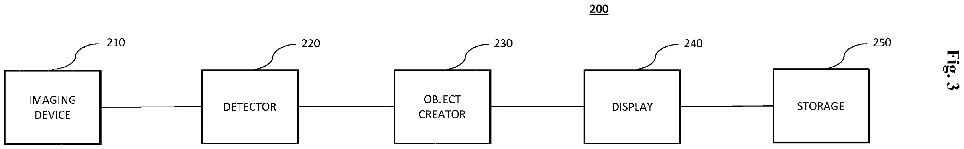

FIG. 3 is a view approximately illustrating a configuration of an image processing system according to another embodiment of the present disclosure. Referring to FIG. 3, the image processing system according to another embodiment of the present disclosure 200 further includes a storage 250 compared to the image processing system 100 explained with reference to FIG. 2.

The storage 250 stores information about the object detected in the detector 220 and the new object created in the object creator 230. The storage 250 may include at least one of a volatile memory and nonvolatile memory. The storage 250 may include at least one of, for example, a flash memory, Read Only Memory (ROM), Random Access Memory (RAM), Electrically Erasable ROM (EEROM), Erasable Programmable ROM (EPROM), Electrically Erasable Programmable ROM (EEPROM), Hard Disk Drive (HDD), or register. The storage 250 may include, for example, a file system, database or embedded database, etc.

The information about the object stored in the storage 250 may be provided to other users by choice of the user using the image processing system 200. For example, when a first user provides a second user with information about an object that the first user detected and information about a newly created object, the second user who receives the information may obtain information about objects detectable using the image processing system 200 and information about newly creatable objects. By doing this, it is possible to check the information about the objects stored by another user, that is, the objects that the other user retains, and it is possible to induce motivation to obtain a new object.

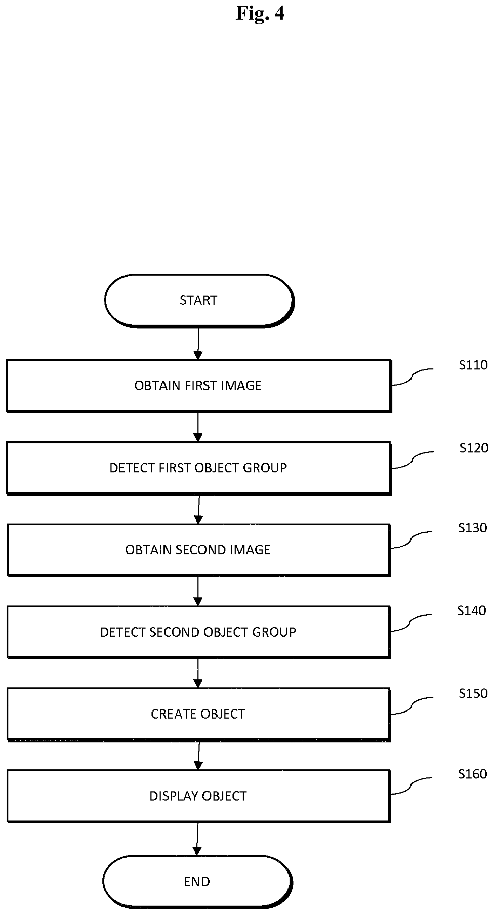

FIG. 4 is a flowchart approximately illustrating an image processing method according to an embodiment of the present disclosure. Referring to FIG. 4, the image processing method according to an embodiment of the present disclosure includes obtaining a first image (S110), detecting a first object group (S120), obtaining a second image (S130), detecting a second object group (S140), creating an object (S150) and displaying the object (S160).

The image processing method according to the present disclosure may be implemented through a user terminal that includes a photographing device and display device, and the user terminal may obtain an image through the photographing device, and the display device may provide various information and data to the user of the user terminal. Further, the user terminal may transceive data with a device existing on the periphery or existing remotely using a communication device.

At the obtaining a first image (S110), the first image is obtained using the user terminal that includes the photographing device. At the obtaining a first image (S110), the image may be obtained using the photographing device such as a camera and the like provided in the user terminal, wherein according to an embodiment, the image may be obtained in response to a shutter input corresponding to an image obtainment shown through the display device provided in the user terminal. In another embodiment, when a practically identical image is shown through the display device for a pre-determined time or more, the image may be obtained. Otherwise, the image may be obtained by reading the image stored in the user terminal.

The first image is different from the second image to be obtained at the obtaining a second image (S130), and it may be understood that the first image and the second image are images that are independent from each other. The first image and the second image may be obtained consecutively.

At the detecting a first object group (S120), the first object group that includes at least one object from the first image is detected. For example, the first object group may include n number of objects. The number of objects included in the first object group may depend on the first image. For example, to compare between a case where the first image is a photograph of the sky and a case where the first image is a photograph of a street, it is possible to anticipate that the case where the first image is a street will have a greater number of objects included in the first object group.

Further, the term 'object' used in the present specification means an image that is detectable by the image processing system and method according to the present disclosure in addition to meaning 'thing', 'matter', 'article' and the like to be distinguished from the background.

At the obtaining a second image (S130), the second image is obtained using the user terminal, and at the detecting a second object group (S140), the second object group that includes at least one object from the second image is detected.

At the detecting a first object group (S120) and at the detecting a second object group (S140), various kinds of objects included in the first image and the second image may be detected, and an object included in a pre-view image may be detected using a pre-learned model.

The pre-learned model may be the pre-view image, that is, a data recognition model used for identifying an object included in the first image and second image. The data recognition model may be a model that is based on a neural network. For example, as the pre-learned model, models such as Deep Neural Network (DNN), Recurrent Neural Network (RNN) and Bidirectional Recurrent Deep Neural Network (BRDNN) may be used as the data recognition model, but there is no limitation thereto.

The prepared pre-learned model may be a pre-learned model for identifying the type of the object included in the pre-view image. The pre-learned model for identifying the type of the object may be a result learned from a correlation between a plurality of photograph image data and the types of the objects included in a plurality of photographs. For example, the user terminal may learn the correlation between the plurality of photograph image data and the types of the objects included in the plurality of photographs. The user terminal may train its artificial neural network based on the learned result, to create the pre-learned model for identifying the type of the object included in the pre-view image.

The second image indicates an image obtained at a time point different from the first image, and the number and type of the object included in the second object group may be different from those of the first object group. Further, the objects included in the first object group and the second object group may be of an identical type but in different forms. Meanwhile, at each of the detecting a first object group (S120) and the detecting a second object group (S140), two or more objects may be detected.

At the creating an object (S150), the first object group and the second object group are combined to create a new object. Specifically, at the creating an object (S150), an object included in the first object group and an object included in the second object group are combined to create the new object. The new object created at the creating an object (S150) may be different from the objects included in the first object group or the second object group, but there is no limitation thereto.

For example, when a bicycle and wheel are included in the first object group, and a wheel is included in the second object group, at the creating an object (S150), the wheel of the first object group and the wheel of the second object group may be combined to create a bicycle as the new object. Meanwhile, when there is no object that corresponds to the combination of the bicycle and wheel, the object being created at the creating an object (S150) may be just the bicycle.

Further, at the creating an object (S150), three or more objects may be combined to create the new object. For example, when four wheels are detected as objects at the detecting a first object group (S120) and the detecting a second object group (S140), at the creating an object (S150), these may be combined to create a motor vehicle as the new object. Further, when two wheels and one steel are detected as objects at the detecting a first object group (S120) and the detecting a second object group (S140), these may be combined to create bike as the new object at the creating an object (S150).

At the displaying the object (S160), the new object is displayed on the display device of the user terminal. The display device may include a flat panel display device such as a Liquid Crystal Display (LCD), Organic Light Emitting Diode (OLED), or Plasma Display Panel (PDP), etc. Further, the display device may include a curved display or flexible display.

At the displaying the object (S160), in displaying the new object, an object image corresponding to each object may be used. In the above example, when the bicycle is created at the creating an object (S150), at the displaying the object (S160), the object image corresponding to the bicycle may be displayed. The object image may be an image of the newly created object itself, or a pre-designed illustration corresponding to each object.

Meanwhile, the object image may be displayed in an overlay form on top of the first image and second image obtained at the obtaining a first image (S110) and at the obtaining a second image (S130), or solely as the object image. However, the object image display method is not limited to the above-exemplified method.

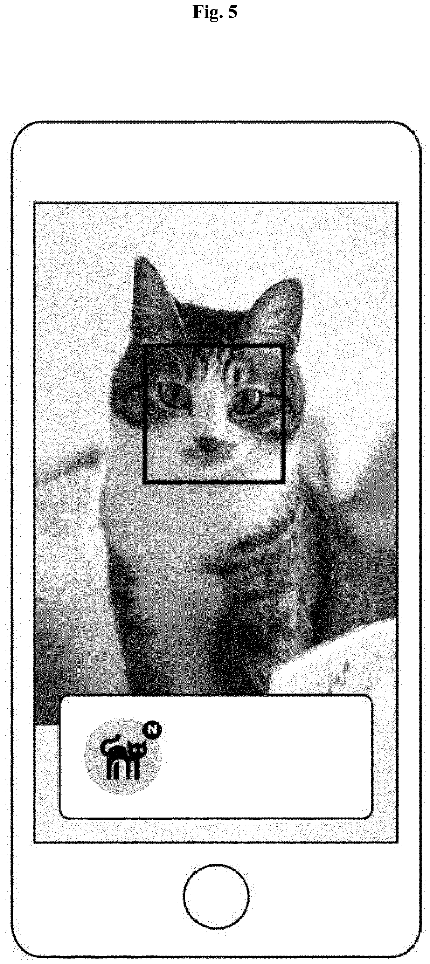

FIGs. 5 to 7 are exemplary views of an object being detected and a new object being created according to an embodiment of the present disclosure.

First, FIG. 5 is an exemplary view of a process of obtaining a first image using the photographing device (for example, camera and the like) provided in the user terminal and detecting a first object group from the first image. In FIG. 5, the image that includes a cat, displayed through the display of the user terminal, corresponds to the first image. Further, it may be understood that the cat included in the first image is an object included in the first object group.

As explained with reference to FIG. 3, at the obtaining a first image (S110), the first image is obtained, and at the detecting a first object group (S120), the first object group is detected. Therefore, according to the image processing method according to an embodiment of the present disclosure, at the obtaining a first image (S110), the first image that includes the cat, as illustrated in FIG. 5, is obtained using the user terminal. Further, at the detecting a first object group (S120), the first object group is detected from the first image. As explained above, in the example of FIG. 5, the image includes the cat, and thus it may be understood that the first object group includes the cat as object.

Meanwhile, referring to FIG. 5, when the object is detected from the first image, the object image corresponding to the detected object may be displayed through the display of the user terminal, and as illustrated in FIG. 5, a mark (N) that indicates the newly detected object may be displayed together. In FIG. 5, the object image is illustrated as being displayed in a lower end area of the display, but there is not limitation thereto.

In order to obtain the image shown through the display of the user terminal as the first image, an image photographing button provided in the user terminal may be selected, but the present disclosure is not necessarily limited to such a method, and when it is determined that there exists an object in the image obtained through the photographing device, the first image may be obtained without any separate manipulation.

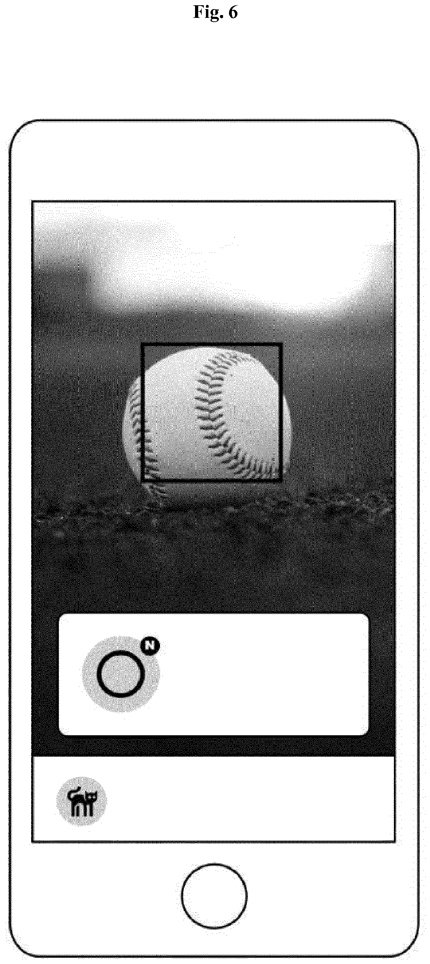

Referring to FIGs. 3 and 6, at the obtaining a second image (S130), the second image is obtained, and FIG. 6 illustrates an example where the second image includes a baseball. At the detecting a second object group (S140), the second object group that includes an object corresponding to the baseball is detected. Referring to FIG. 6, the second object group detects a circle as the object corresponding to the baseball, and as explained with reference to FIG. 5, the mark (N) may be displayed together with the object image corresponding to the circle to indicate that the circle is the newly detected object.

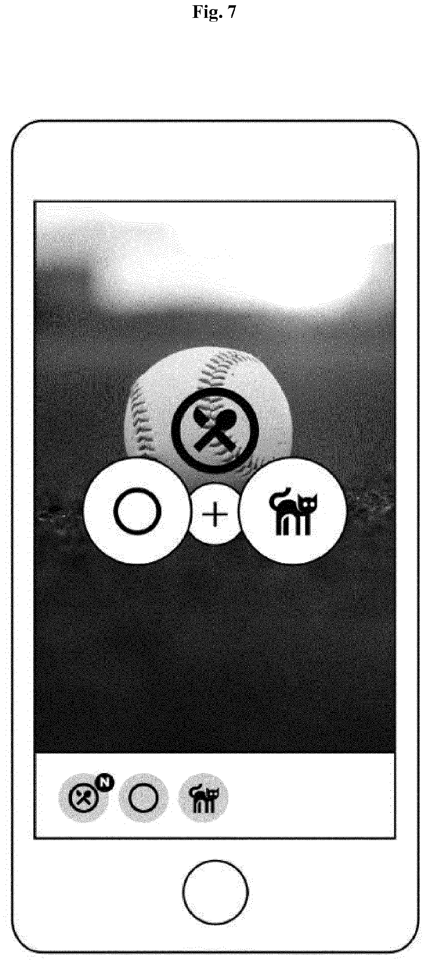

Referring to FIG. 7, at the creating an object (S150), pre-detected objects are combined to create a new object. In the examples in FIGs. 5 and 6, the cat and circle were each detected to be included in the first object group and the second object group, and referring to FIG. 7, at the creating an object (S150), the cat and the circle are combined to create food as the new object. Here, an object image corresponding to the food created as the new object may be displayed through the display of the user terminal. Further, the mark (N) indicating that it is a new object may be displayed together, and an object image corresponding to the pre-detected objects may be displayed together.

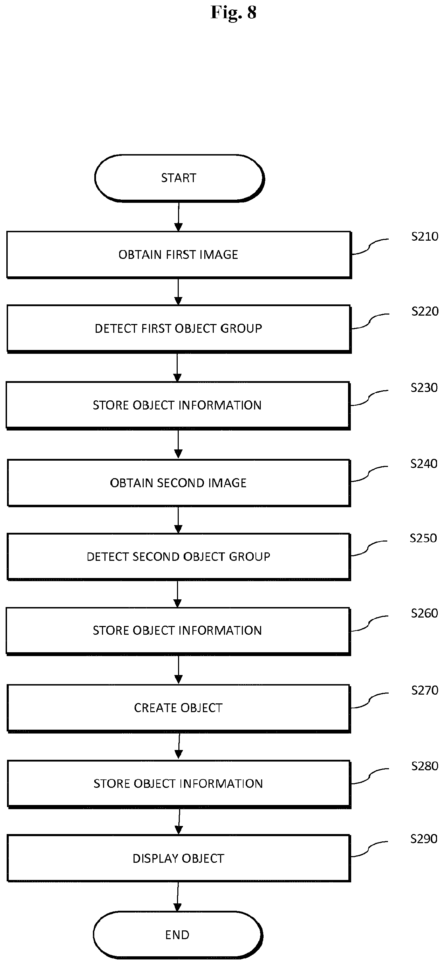

FIGs. 8 to 10 are flowcharts approximately illustrating an image processing method according to another embodiment of the present disclosure.

Referring to FIG. 8, the image processing method according to another embodiment of the present disclosure includes obtaining a first image (S210), detecting a first object group (S220), storing object information (S230), obtaining a second image (S240), detecting a second object group (S250), storing object information (S260), creating an object (S270), storing object information (S280) and displaying the object (S290).

At the obtaining a first image (S210), at the detecting a first object group (S220), at the obtaining a second image (S240), at the detecting a second object group (S250), at the creating an object (S270) and at the displaying the object (S290), practically identical operations as at the obtaining a first image (S110), at the detecting a first object (S120), at the obtaining a second image (S130), at the detecting a second object group (S140), at the creating an object (S150) and at the displaying the object (160) explained with reference to FIG. 4 are performed, and thus detailed explanation on the repetitive contents will be omitted.

At the storing object information (S230), information about at least one object detected from the first object group is stored in an object database. As explained with reference to FIG. 4, the first object group may include a plurality of objects, and at the storing object information (S230), information about the object detected from the first image, that is, the object included in the first object group is stored in the object database. Similarly, at the storing object information (S260), information about at least one object detected from the second object group is stored in the object database.

The information about the object may include a type, title, color, form and the like of the detected object. Further, information about another object detected together with any one object may be stored together.

The object database may be a data storage place provided in the user terminal, and may include at least one of a volatile memory and nonvolatile memory. The object database may include at least one of, for example, a flash memory, Read Only Memory (ROM), Random Access Memory (RAM), Electrically Erasable ROM (EEROM), Erasable Programmable ROM (EPROM), Electrically Erasable Programmable ROM (EEPROM), Hard Disk Drive (HDD), or register. The object database may include, for example, a file system, database or embedded database, etc.

The information about the object included in the first object group and the second object group may be stored in the object database correspondingly to each user. For example, information about the object detected from the image obtained from a first user and information about the objected detected from the image obtained from a second user may be stored in the object database separately correspondingly to each user.

Further, at the storing the object information (S280), information about the object created at the creating an object (S270) is stored in the object database. The information about the created object may also be stored separately correspondingly to each user.

Pieces of information about the objects stored in the object database may basically be stored separately correspondingly to each user, and the information about the object detected or created in any one user terminal may be provided to another user terminal.

Users who use the image processing method according to the present disclosure may be provided with the information about the object stored in the object database, and through this, the users may check the information about the object detected by other users and about the object created by other users.

When the type and number of the object that is detectable or creatable by the image processing method according to the present disclosure are pre-determined, it is possible to enhance motivation to collect any obtainable object faster than other users, and through this, it is possible to provide an interesting entertaining element.

Meanwhile, in order to receive the information stored in the object database, a communication means provided in the user terminal may be used. The communication means may include a long-distance network interface such as, for example, a 3G module, LTE module, LTE-A module, Wi-Fi module, WiGig module, Ultra Wide Band (UWB) module, or LAN card, etc. Further, the communication means may include a short-distance network interface such as a Magnetic Secure Transmission (MST) module, Bluetooth module, NFC module, RFID module, ZigBee module, Z-Wave module, or InfraRed ray module, etc. Further, the communication means may include other network interfaces.

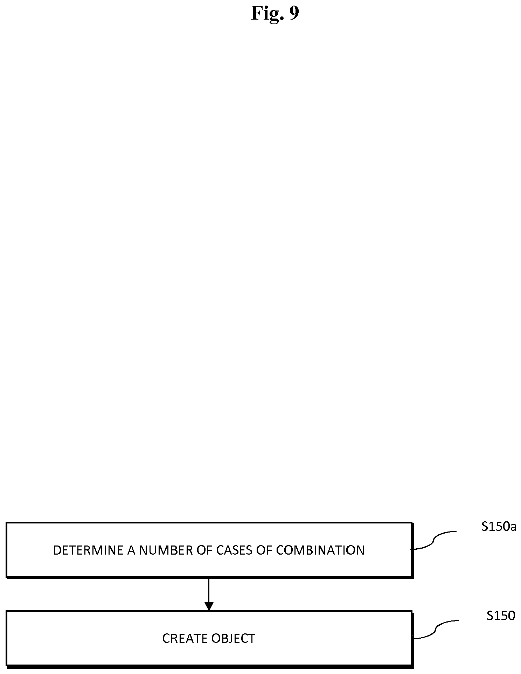

Next, referring to FIG. 9, the creating a new object (S150) includes determining a number of cases that the new object can be created by combining at least one object included in the first object group and at least one object included in the second object group (S150a).

For example, in a case where there exists n number of detectable objects in the first object group and m number of detectable objects in the second object group, and one object is selected from each of the first object group and the second object group, and then combined, the number of cases of combinations determined at S150a may be nxm at the most. Further, the number of cases of combinations may be at least 0.

In another embodiment, in a case of selecting two or more objects from at least one of the first object group and the second object group as materials for combination, the number of cases of combinations may be greater than n×m at the most.

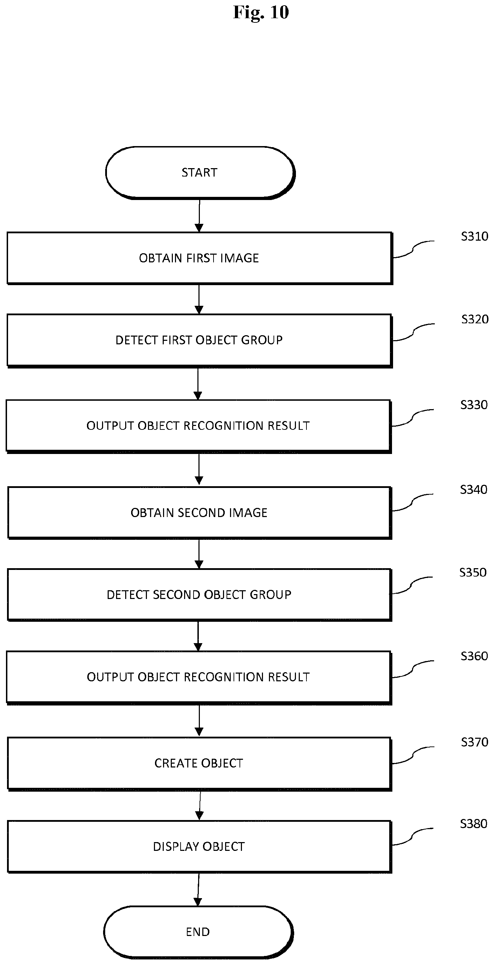

Referring to FIG. 10, the image processing method according to another embodiment of the present disclosure includes obtaining a first image (S310), detecting a first object group (S320), outputting an object recognition result (S330), obtaining a second image (S340), detecting a second object group (S350), outputting an object recognition result (S360), creating an object (S370) and displaying the object (S380).

At the obtaining a first image (S310), at the detecting a first object group (S320), at the obtaining a second image (S340), at the detecting a second object group (S320), at the obtaining a second image (S340), at the detecting a second object group (S350), at the creating an object (S370) and at the displaying the object, practically identical operations as those at the obtaining a first image (S110), at the detecting a first object group (S120), at the obtaining a second image (S130), at the detecting a second object group (S140), at the creating an object (S150) and at the displaying the object (S160), as explained with reference to FIG. 4, are performed, respectively, and thus detailed explanation about repetitive contents will be omitted.

At the outputting an object recognition result (S330), the recognition result is output correspondingly to the object included in the first object group, detected at the detecting a first object group (S320). The recognition result may correspond to the object image explained above, but there is no limitation thereto, and the recognition result may correspond to audiovisual effects that include the object image. For example, at the outputting an object recognition result (S330), the type or name of the object detected at the detecting a first object group (S320) may be displayed as text, or sound corresponding thereto may be output. Further, the text and sound may be output simultaneously.

Meanwhile, at the outputting an object recognition result (S360), the recognition result is output correspondingly to the object included in the second object group, detected at the detecting a second object group (S350). The recognition result may correspond to the above explained object image, but there is no limitation thereto, and the recognition result may correspond to the audiovisual effects that include the object image. For example, at the outputting an object recognition result (S360), the type or name of the object detected at the detecting a second object group (S350) may be displayed as text, or sound corresponding thereto may be output. Further, the text and sound may be simultaneously output.

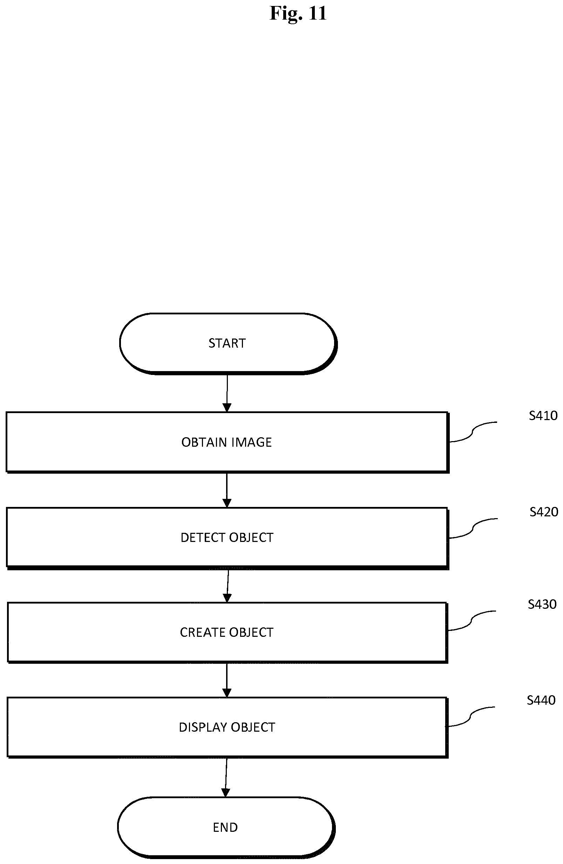

FIG. 11 is a flowchart approximately illustrating an image processing method according to another embodiment of the present disclosure. Referring to FIG. 11, the image processing method according to another embodiment of the present disclosure includes obtaining an image (S410), detecting an object (S420), creating an object (S430) and displaying the object (S440).

At the obtaining an image (S410), the image is obtained using the user terminal that includes the photographing device. The user terminal may obtain the image using the photographing device, and the user terminal may have a display device to provide various information and data to the user. Further, the user terminal may transceive data with a device existing on the periphery or remotely using the user terminal.

In an embodiment, at the obtaining an image (S410), the image may be obtained in response to a shutter input that corresponds to an image obtainment shown through the display device provided in the user terminal. In another embodiment, in a case where a practically identical image is shown for a pre-determined time or more through the display device or in a case where practically identical image data is obtained for a pre-determined time or more through the photographing device, the image may be obtained. Otherwise, the image may be obtained as the image stored in the user terminal is read.

At the detecting an object (S420), a plurality of objects included in the image obtained at the obtaining an image (S410) are detected. The plurality of objects detected at the detecting an object (S420) may be included in one object group. For example, the object group may include n number of objects. The number of objects included in the object group may depend on the image obtained at the obtaining an image (S410). For example, to compare between a case where the first image is a photograph of the sky and a case where the first image is a photograph of a street, it is possible to anticipate that the case where the first image is a street will have a greater number of objects included in the object group.

As explained above, the term 'object' used in the present specification means an image that is detectable by the image processing system and method according to the present disclosure in addition to the meaning of a 'thing', 'matter', 'article' and the like to be distinguished from the background.

At the detecting an object (S420), in order to detect the objects, a pre-learned model may be used. The pre-learned model may be a data recognition model used for identifying the object included in the image obtained at the obtaining an image (S410). The data recognition model may be a model that is based on a neural network. For example, as the pre-learned model, models such as Deep Neural Network (DNN), Recurrent Neural Network (RNN) and Bidirectional Recurrent Deep Neural Network (BRDNN) may be used as the data recognition model, but there is no limitation thereto.

The pre-learned model may be for identifying the type of the object included in the pre-view image shown through the display device of the user terminal. The pre-learned model for identifying the type of the object may be a result learned from a correlation between a plurality of photograph image data and the types of the objects included in a plurality of photographs. For example, the user terminal may learn the correlation between the plurality of photograph image data and the types of the objects included in the plurality of photographs. The user terminal may train its artificial neural network based on the learned result, to create the pre-learned model for identifying the type of the object included in the pre-view image.

At the creating an object (S430), the plurality of objects detected at the detecting an object (S420) are combined to create a new object. The image processing method according to an embodiment of the present disclosure explained with reference to FIGs. 4 to 10 is characterized to combine the objects detected from images that are different from one another to create a new object, whereas the image processing method defined by the flowchart of FIG. 11 is characterized to combine the plurality of objects detected from one image to create a new object.

That is, the present disclosure may use both the method of detecting objects from each of the consecutively obtained images that are different from one another and then combining the objects, or the method of detecting a plurality of objects from one image and then combining the objects.

Meanwhile, at the displaying the object (S440), the object created at the creating an object (S430) is displayed on the display device of the user terminal. The display device may include a flat panel display device such as a Liquid Crystal Display (LCD), Organic Light Emitting Diode (OLED) or Plasma Display Panel (PDP) etc. Further, the display device may include a curved display or flexible display.

At the displaying the object (S440), in displaying the created object, an object image corresponding to each object may be used. As explained with reference to FIGs. 5 to 7, object images corresponding to the cat, circle and food and the like may be displayed on the user terminal. Further, the object image may be an actual image of the newly created object itself, or an illustration pre-designed to correspond to each object.

Meanwhile, the object image may be displayed in an overlay form on top of the image obtained at the obtaining a first image (S410), or solely as the object image. However, the object image display method is not limited to the above-exemplified method.

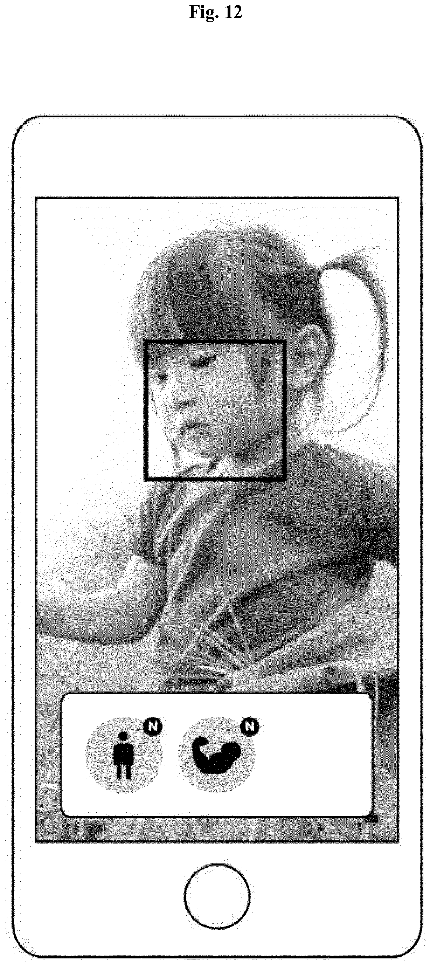

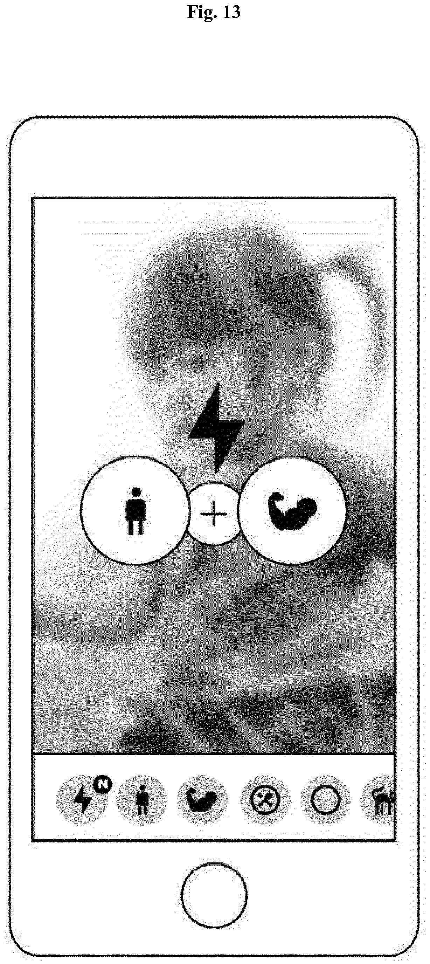

FIGs. 12 and 13 are exemplary views for explaining the image processing method according to another embodiment of the present disclosure.

First of all, referring to FIG. 12, through the photographing device of the user terminal, a predetermined image is obtained at the obtaining a first image (S410), and then at the detecting an object (S420), a person and the person's arm are each detected as the object. The image obtained at the obtaining a first image (S410) includes a child and surrounding plants, and at the detecting an object (S420), it is understood that the child is recognized and the person and the person's arm are detected as objects. Meanwhile, the person and the person's arm detected as objects at the detecting an object (S420) may each be displayed as an object image, and if the detected object is a new object that has not been detected in the past, it is possible to display that it is a new object by using the mark 'N'.

FIG. 13 is an exemplary view of combining the objects detected at the detecting an object (S420) and creating a new object at the creating an object (S430). Referring to FIG. 13, the 'person' and 'arm' detected at the detecting an object (S420) may be combined to create a 'thunder' or 'energy' at the creating an object (S430). Combining objects explained in the present specification means arbitrary combination for convenience of explanation, and thus the 'thunder' or 'energy' are not necessarily created by combining the 'person' and 'arm' as illustrated in FIG. 13.

Creating a new object by combining objects may be done according to a pre-determined rule, or determined based on the user's choice. For example, in an embodiment of the present disclosure, when there exist two or more new objects that are creatable by combining two or more arbitrary objects, the creatable object may be displayed through the display device of the user terminal. The user may determine the object to be newly created by selecting any one of the two or more objects displayed on the display device.

When the new object is created by a pre-determined rule, it may be understood as having determined that there is just one new object creatable by combining the arbitrary two or more objects, or that it is impossible for the user to select the object.

Meanwhile, there may be various rules for combining a plurality of objects that are identical or different from one another and creating a new object, wherein the rules may be based on a characteristic of the object detected at the detecting an object (S420). This characteristic may be, for example, a molecular formula corresponding to the object. At the creating an object (S430), it may be determined whether there exists a new object creatable by combining the molecular formulas corresponding to the detected objects. Further, the characteristic may be a shape of the detected object. For example, when a plurality of ball-shaped objects are detected, a snowman may be created as the new object. Further, the characteristic may be a recipe. For example, when a plurality of objects corresponding to food material are detected, food that can be made using the detected objects may be created as the new object.

The above-mentioned examples of the characteristics of an object are for convenience of explanation only, and thus there is no limitation to such embodiments, and it should be obvious to a person skilled in the art that anything that can be combined to create a new object may be a characteristic of the object.

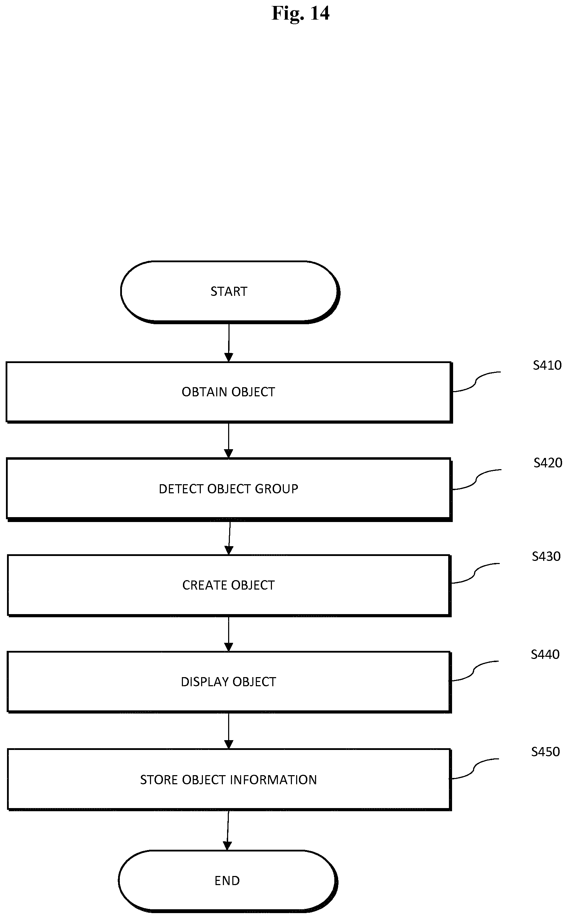

FIG. 14 is a flowchart approximately illustrating the image processing method according to another embodiment of the present disclosure. Referring to FIG. 14, the image processing method according to another embodiment of the present disclosure includes obtaining an image (S410), detecting an object (S420), creating an object (S430), displaying the object (S440) and storing object information (S450). It may be understood that the obtaining an image (S410), the detecting an object (S420), the creating an object (S430) and the displaying the object (S440) are practically identical steps as the obtaining an image (S410), the detecting an object (S420), the creating an object (S430) and the displaying the object (S440) explained with reference to FIG. 11. Therefore, it may be understood that the image processing method according to another embodiment of the present disclosure explained through FIG. 14 further includes the storing object information (S450).

At the storing object information (S450), information about the new object created at the creating an object (S430) is stored in an object database. The information about the object may include a type, title, color, shape and the like of the newly created object. Further, when a molecular formula or recipe corresponding to the newly created object is known, the molecular formula or recipe may also be stored as the information about the object.

The object database may be a data storage place provided in the user terminal, and may include at least one of a volatile memory and nonvolatile memory. The object database may include at least one of, for example, a flash memory, Read Only Memory (ROM), Random Access Memory (RAM), Electrically Erasable ROM (EEROM), Erasable Programmable ROM (EPROM), Electrically Erasable Programmable ROM (EEPROM), Hard Disk Drive (HDD), or register. The object database may include, for example, a file system, database or embedded database, etc.

Further, at the storing object information (S450), the information about the object detected at the detecting an object (S420) may be stored together in the object database. The information about the object detected at the detecting an object (S420) may include the type, title, color, shape, molecular formula, recipe and the like just as the information about the object created at the creating an object (S430).

Meanwhile, the information about the object may be stored separately according to user, and the information about the object detected or created in any one user terminal may be provided to another user terminal.

Therefore, users who use the image processing method according to the present disclosure may be provided with the information about the objects stored in the object database, and through this, the users may check the information about the objects detected by other users and about the objects created by the other users.

When the type and number of the object detectable or creatable by the image processing method according to the present disclosure are pre-determined, it is possible to enhance motivation to collect any obtainable object faster than other users, and through this, it is possible to provide an interesting entertaining element. Further, when there is no limitation to the type or number of the detectable or creatable object, it is possible to enhance motivation to obtain more new objects than other users, which may also act as a new entertaining element.

The above explained embodiments may be implemented in the form of recording medium that includes computer executable commands such as program modules executable by computers. Computer readable medium may be arbitrary available medium accessible by computers, and may include any volatile medium and nonvolatile medium, separable and non-separable medium.

Further, the computer readable medium may include a computer storage medium. The computer storage medium may include any volatile and nonvolatile, separable and non-separable medium implemented in an arbitrary method or technology for storing information such as computer readable commands, data structures, program modules or other data.

The embodiments of the present disclosure have been explained above with reference to the attached drawings, but a person skilled in the related art will be able to understand that the present disclosure may be implemented in other specific forms without altering its technical idea or essential characteristics. Therefore, the embodiments explained above should be understood as being exemplary and not limitative in all aspects.

At least one of the components, elements, modules or units (collectively "components" in this paragraph) represented by a block in the drawings may be embodied as various numbers of hardware, software and/or firmware structures that execute respective functions described above, according to an exemplary embodiment. For example, at least one of these components may use a direct circuit structure, such as a memory, a processor, a logic circuit, a look-up table, etc. that may execute the respective functions through controls of one or more microprocessors or other control apparatuses. Also, at least one of these components may be specifically embodied by a module, a program, or a part of code, which contains one or more executable instructions for performing specified logic functions, and executed by one or more microprocessors or other control apparatuses. Further, at least one of these components may include or may be implemented by a processor such as a central processing unit (CPU) that performs the respective functions, a microprocessor, or the like. Two or more of these components may be combined into one single component which performs all operations or functions of the combined two or more components. Also, at least part of functions of at least one of these components may be performed by another of these components. Further, although a bus is not illustrated in the above block diagrams, communication between the components may be performed through the bus. Functional aspects of the above exemplary embodiments may be implemented in algorithms that execute on one or more processors. Furthermore, the components represented by a block or processing steps may employ any number of related art techniques for electronics configuration, signal processing and/or control, data processing and the like.

## Claims

1. An image processing method comprising:
obtaining a first image using a user terminal that includes a photographing device;
detecting a first object group that includes at least one object from the first image;
obtaining a second image using the user terminal;
detecting a second object group that includes at least one object from the second image;
creating a new object by combining the first object group and the second object group; and
displaying the created new object on a display device of the user terminal.

2. The image processing method according to claim 1, further comprising:
storing information about at least one object detected from the first object group in an object database; and
storing information about at least one object detected from the second object group in the object database.

3. The image processing method according to claim 1, further comprising:
storing information about the new object in an object database.

4. The image processing method according to claim 1, wherein the creating a new object comprises determining a number of cases that the new object can be created by combining at least one object included in the first object group and at least one object included in the second object group.

5. The image processing method according to claim 1, wherein the creating a new object creates the new object as a result of all possible combinations of the object included in the first object group and the object included in the second object group.

6. The image processing method according to claim 1, further comprising:
displaying a recognition result of at least one object included in the first object group on the display device;
displaying a recognition result of at least one object included in the second object group on the display device; and
displaying a type or title of the created new object on the display device.

7. An image processing method comprising:
obtaining an image using a user terminal that includes a photographing device;
detecting a plurality of objects included in the image;
creating a new object by combining the detected plurality of objects; and
displaying the created new object on a display device of the user terminal.

8. The image processing method according to claim 7, further comprising:
storing information about the detected object in an object database.

9. The image processing method according to claim 7, further comprising:
storing information about the created new object in an object database.

10. The image processing method according to claim 7, wherein the creating a new object comprises determining a number of cases that the new object can be created for every object detected from the image.

11. The image processing method according to claim 7, further comprising:
displaying an object recognition result in the image on the display device; and
displaying a type or title of the new object on the display device.

## Amended claims

### Amended claims in accordance with Rule 137(2) EPC.

1. An image processing method comprising:
obtaining a first image including at least one object, using a user terminal that includes a photographing device;
detecting a first object group that includes at least one object from the first image;
obtaining a second image including at least one object, using the user terminal;
detecting a second object group that includes at least one object from the second image;
creating a new object by combining the first object group and the second object group based on rules processing characteristics of the first object group and the second object group, the characteristics comprising at least one of a molecular formula, shape or recipe of the detected objects; and
displaying the created new object on a display device of the user terminal.

2. The image processing method according to claim 1, further comprising:
storing information about at least one object detected from the first object group in an object database; and
storing information about at least one object detected from the second object group in the object database.

3. The image processing method according to claim 1, further comprising:
storing information about the new object in an object database.

4. The image processing method according to claim 1, wherein the creating a new object comprises determining a number of cases, each of the cases corresponding to combining at least one object included in the first object group and at least one object included in the second object group.

5. The image processing method according to claim 1, wherein the creating a new object creates the new object as a result of all possible combinations of the object included in the first object group and the object included in the second object group.

6. The image processing method according to claim 1, further comprising:
displaying a recognition result of at least one object included in the first object group on the display device;
displaying a recognition result of at least one object included in the second object group on the display device; and
displaying, as a text, a type or title of the created new object on the display device.

7. An image processing method comprising:
obtaining an image using a user terminal that includes a photographing device;
detecting a plurality of objects included in the image;
creating a new object by combining objects detected in the plurality of objects based on rules processing characteristics of the detected objects, the characteristics comprising at least one of a molecular formula, shape or recipe of the detected objects; and
displaying the created new object on a display device of the user terminal.

8. The image processing method according to claim 7, further comprising:
storing information about the detected object in an object database.

9. The image processing method according to claim 7, further comprising:
storing information about the created new object in an object database.

10. The image processing method according to claim 7, wherein the creating a new object comprises determining a number of cases, each of the cases corresponding to one of the objects detected in the image.

11. The image processing method according to claim 7, further comprising:
displaying an object recognition result in the image on the display device; and
displaying, as a text, a type or title of the new object on the display device.
